# EUROPÄISCHE PATENTSCHRIFT

(11) **EP 0 979 159 B1**
(45) Veröffentlichungstag und Bekanntmachung des Hinweises auf die Patenterteilung: **20.03.2002**
(21) Anmeldenummer: 98925493.3
(22) Anmeldetag: 28.04.1998
(51) Int. Cl.: B23Q 5/04

(54) **ERWEITERUNGSAGGREGAT FÜR EIN BEARBEITUNGSZENTRUM**
ADD-ON AGGREGATE FOR A MACHINING CENTRE
AGREGAT EXTENSIBLE POUR CENTRES D'USINAGE

(30) Priorität: 30.04.1997 DE 19718396
(43) Veröffentlichungstag der Anmeldung: 16.02.2000
(73) Patentinhaber: HOMAG MASCHINENBAU AG, D-72296 Schopfloch (DE)
(72) Erfinder: GAUSS, Achim, D-75323 Bad Wildbach (DE); KALMBACH, Kurt, D-72275 Alpirsbach (DE)
(74) Vertreter: HOFFMANN - EITLE
(86) Internationale Anmeldenummer: EP9802509
(87) Internationale Veröffentlichungsnummer: WO9848976

(56) Entgegenhaltungen:
- EP-A- 0 808 688
- WO-A-89/03277
- WO-A-96/39274
- JP-A- 60 155 310
- JP-A- 60 161 006
- US-A- 3 559 529
- US-A- 5 295 772

## Beschreibung

### Technisches Gebiet

Die Erfindung betrifft ein Erweiterungsaggregat für ein Bearbeitungszentrum, das in die Spindeleinheit des Bearbeitungszentrums einwechselbar ist und an dem wiederum ein oder mehrere Arbeitsmittel einwechselbar oder anbaubar sind. Unter Arbeitsmittel werden hier Bearbeitungswerkzeuge oder - aggregate für Holz- oder holzähnliche Werkstoffe, Kunststoffe oder dergleichen, aber auch allgemein Handlings- oder Sensoreinrichtungen zusammengefaßt.

Zur Gruppe der Bearbeitungswerkzeuge bzw. -aggregate, die in ein erfindungsgemässes Erweiterungsaggregat einwechselbar oder anbaubar sind, seien hier beispielhaft genannt: Bohr-, Säge- und Kappaggregat, Bündigfräsaggregat, Vertikal-Fräsaggregat, Schloßkastenfräsaggregat, Unterflurfräsaggregat, Horizontal-Fräsaggregat, Kantenumleimaggregat etc.

Ferner seien hier zur Gruppe der Handlings- bzw. Sensoreinrichtungen beispielhaft aufgeführt: mechanische Greifer oder Vakuumgreifer, Taster, Meßaufnehmer, Kameraeinrichtungen etc.

### Stand der Technik

Im Gegensatz zu sogenannten Durchlaufmaschinen, bei denen die Werkstücke entlang einer geradlinigen Bearbeitungsstrecke bewegt und im Verlaufe der Bewegung zur Durchführung von hintereinandergeschalteten Bearbeitungsvorgängen an den Bearbeitungsaggregaten vorbeibewegt werden, liegen die Werkstücke bei Bearbeitungszentren auf einem feststehenden Arbeitstisch fest, während die Bearbeitungsaggregate bzw.

Handlings- oder Sensoreinrichtungen - d.h. allgemein Arbeitsmittel - um die festliegenden Werkstücke herumgeführt werden.

Diese Vorgehensweise erlaubt eine wirtschaftliche Fertigung kleiner Losgrößen und die Bearbeitung schwieriger Formen bei hoher Bearbeitungsgenauigkeit und exakter Reproduzierbarkeit. Zudem ist mit derartigen Bearbeitungszentren ein hoher Automatisierungsgrad möglich und der Platzbedarf gegenüber Durchlaufmaschinen äußerst gering.

So werden in einem Bearbeitungszentrum eine Vielzahl aufeinanderfolgender Bearbeitungsschritte, wie beispielsweise Bohr-, Fräs-, Meßvorgänge und dergleichen, an Werkstücken aus Holz-, Kunststoff-, Schicht- oder Verbundwerkstoffen durchgeführt. Dazu sind die eingangs genannten Bearbeitungswerkzeuge oder -aggregate für Holz- oder holzähnliche Werkstoffe, Kunststoffe oder dergleichen bzw. Handlings- oder Sensoreinrichtungen in die Spindeleinheit (Hauptspindel) des Bearbeitungszentrums einwechselbar ausgestaltet. Je nach der durchzuführenden Bearbeitung oder auszuführenden Tätigkeit wird das dazu bestimmte Arbeitsmittel aus einer Speichereinrichtung geholt und manuell oder automatisch in die Spindeleinheit eingewechselt.

Kostengünstige Bearbeitungszentren verfügen über drei numerisch gesteuerte translatorische Achsen, die auch um zwei rotatorische Achsen ergänzt werden können. Dabei bestimmt die Art der Zuordnung der Bewegungsachsen auf dem Werkstückträger (Tisch) oder Werkzeugträger (Spindeleinheit) den Typ eines Bearbeitungszentrums. Das heißt, das Kennzeichen eines Bearbeitungszentrums sind insbesondere Art und Anzahl der gesteuerten Achsen neben Schnittleistung, Drehzahl- und Vorschubbereich etc.

Bei sehr komplizierten Werkstückformen oder komplizierten Tätigkeiten, die am Werkstück auf dem Werkstückträger auszuführen sind, kamen bisher nur fünf- oder mehrachsige Bearbeitungszentren zum Einsatz. Solche 5-oder 6-Achs-Bearbeitungszentren in konventioneller Bauart sind jedoch mit dem Problem behaftet, daß sie sehr teuer und nur eingeschränkt flexibel sind. Insbesondere ist es bei solchen Bearbeitungszentren nachteilig, daß die bei bestimmten Tätigkeiten notwendige 5-oder 6-Achs-Programmierung aufwendig ist. Die Kosten für die Arbeitsvorbereitung steigen zudem exponentiell mit der Anzahl der zu steuernden Achsen. Somit werden die Produktionskosten pro Werkstück, die auf solchen Bearbeitungszentren bearbeitet werden, sehr hoch.

Eine kostengünstigere Variante besteht darin, ein sogenanntes 3+2 - Achs-Bearbeitungszentrum (wie z.B. in WO 89/03277 gezeigt) zu verwenden. Damit ist gemeint, daß drei numerisch gesteuerte, translatorische Achsen um zwei Stellachsen ergänzt werden. So ist beispielsweise ein 4-Achs-Bearbeitungszentrum oftmals an der Spindel mit einer die vierte Achse bildende Dreheinrichtung ausgestattet, die eine Verdrehung des an der Spindel eingewechselten Arbeitsmittels um die sogeannte C-Achse ermöglicht. Ferner wurde bisher bei den bekannten Bearbeitungsaggregaten beispielsweise eine manuelle Verstellung (Verschwenkung) des Werkzeugs vorgesehen. Letztere Lösung weist aber zum einen den Nachteil auf, daß zur Verstellung der Stellung des Werkzeugs der Arbeitsprozess unterbrochen werden muß. Zum anderen muß dann ein Bediener manuell das Werkzeug verschwenken und erneut die Bearbeitung starten.

Aus der DE 33 11 289 A1 ist ein Universalfräskopf für eine Werkzeugmaschine bekannt, der ein Schwenkgehäuse und ein im Schwenkgehäuse wiederum schwenkbar gelagertes Werkzeugspindelgehäuse umfaßt. Die beiden verstellbaren, schwenkbaren Gehäuse weisen jeweils Stirnverzahnungen auf und sind über hydraulische Dreheinrichtungen (Drehstangen) verdrehbar. Damit ist lediglich eine Verstellung der Lage der beiden Gehäuse zueinander von einer Position in eine andere möglich.

Ferner ist aus der DD 285 940 A5 ein wechselbarer Rechtwinker-Fräsapparat für Werkzeugmaschinen bekannt, der über ein Trägergehäuse, an dem ein drehbares Arbeitsspindelgehäuse angebracht ist, und über einen Adapter lösbar an der Werkzeugmaschine einwechselbar ist. Das drehbare Arbeitsspindelgehäuse wird hierbei über eine Indexscheibe verdreht. Die Indexscheibe ist über einen verschiebbaren Indexbolzen feststellbar.

### Darstellung der Erfindung

Das der Erfindung zugrunde liegende technische Problem besteht darin, eine gegenüber dem Stand der Technik flexiblere und kostengünstigere Möglichkeit für eine Mehrachs-Bearbeitung oder Handlingeinrichtungs- oder Sensorführung in einem Bearbeitungszentrum bereitzustellen.

Dieses technische Problem wird durch ein Erweiterungsaggregat mit den Merkmalen des Patentanspruchs 1 gelöst. Ein erfindungsgemäßes Erweiterungsaggregat für ein Bearbeitungszentrum ist dementsprechend so ausgestaltet, daß es in die Spindeleinheit des Bearbeitungszentrums einwechselbar ist. Es ist zumindest eine Aufnahmeeinrichtung zur Aufnahme eines Arbeitsmittels, wie ein Bearbeitungswerkzeug oder - aggregat für Holz- oder holzähnliche Werkstoffe, Kunststoffe oder dergleichen oder eine Handlings- oder Sensoreinrichtung vorgesehen. Des weiteren ist mit der Aufnahmeeinrichtung eine Antriebseinrichtung gekoppelt, um die Stellung der Aufnahmeeinrichtung im Erweiterungsaggregat verändern zu können. Zum Regeln dieser Antriebseinrichtung ist eine Elektronikeinheit zugeordnet, die insbesondere einen kompletten Lageregler mit integriertem Meßsystem umfaßt.

Der Erfindung liegt der Gedanke zugrunde, ein gänzlich neues Aggregat bereitzustellen, das zum einen in die Spindeleinheit eines Bearbeitungswerkzeuges einwechselbar ist und zum anderen selbst zur Aufnahme eines Arbeitsmittels oder eines weiteren erfindungsgemäßen Erweiterungsaggregates ausgestaltet ist. Durch die Erfindung wird somit erstmals eine in die bisherige Arbeitsweise eines CNC-gesteuerten Bearbeitungszentrums integrierte Bearbeitung eines Werkstückes bzw. die Führung eines Arbeitsmittels, wie beispielsweise einer Kamera oder eines Tasters, erweitert um eine oder mehrere Achsen programmgesteuert ermöglicht.

Bisher konnte beim Stand der Technik von einer Spindeleinheit eines Bearbeitungszentrums in ein daran eingewechseltes Bearbeitungsaggregat oder -werkzeug ein Drehmoment der Spindeleinheit zum Betreiben des Werkzeugs -beispielsweise eines Fräsers - eingeleitet werden. Der Fräser selbst konnte nur manuell verdreht bzw. um eine Schwenkachse verschwenkt werden. Die Schwenkachse selbst konnte hierbei nicht programmgesteuert verstellt werden. Die Lageregelung der Hauptachsen wie auch die mechanische Verdrehung des gesamten an der Spindel angekoppelten Aggregats erfolgte in der CNC-Steuerung des Bearbeitungszentrums. Das heißt, die gesamten Antriebsregler zur Ansteuerung der Verdrehung eines Bearbeitungswerkzeuges um die Hauptspindelachse herum ist beim Stand der Technik im Bearbeitungszentrum beinhaltet. Zusätzlich konnte dann lediglich eine Verschwenkung um eine weitere Achse manuell ausgeführt werden, wie es bereits einleitend beschrieben wurde.

Im Gegensatz hierzu ist nunmehr erfindungsgemäß im Erweiterungsaggregat und nicht im Bearbeitungszentrum die gesamte Elektronikeinheit (Antriebsregler) zur Regelung der Veränderung der Arbeitsstellung des am Erweiterungsaggregat einwechselbar anbringbaren Arbeitsmittels beinhaltet. Die Schnittstelle an der Spindeleinheit zum Bearbeitungszentrum weist hierzu eine bidirektionale Informationsaustauschleitung auf. Im Bearbeitungszentrum selbst erfolgt nur die Ausgabe des Befehls an die Elektronikeinheit im Erweiterungsaggregat, wie die Arbeitsstellung des am Erweiterungsaggregat angekoppelten Arbeitsmittels zu verändern ist. Die Ausführung dieses Befehls und die Regelung erfolgt unabhängig hiervon im Regelkeis des Erweiterungsaggregates. Damit wird eine 3D-Bearbeitung oder Abtastung eines Werkstückes auf einer 4-Achs-Maschine ermöglicht. Dabei kann weiterhin auf die bisherige einfache Programmiertechnik zurückgegriffen werden, wie sie für 4-Achs-Bearbeitungszentren herkömmlich verwendet, wird. Dadurch werden die Kosten für die Bearbeitung eines Werkstückes erheblich gesenkt.

Zudem wird durch die Aufnahme des kompletten Regelgeräts in das Erweiterungsaggregat eine stark erhöhte Service-Freundlichkeit erzielt. Funktioniert beispielsweise die Änderung der Arbeitsstellung des Arbeitsmittels am Erweiterungsaggregat nicht korrekt, so kann durch einfachen Austausch durch ein Vergleichs-Erweiterungsaggregat schnell festgestellt werden, wo der Fehler liegt. Funktioniert auch das Vergleichs-Erweiterungsaggregat nicht, so muß der Fehler im Bearbeitungszentrum liegen. Ansonsten ist klar, daß das zuerst benutzte Erweiterungsaggregat fehlerhaft ist.

Durch die Aufnahme eines eigenen Antriebs im Erweiterungsaggregat und nicht im Bearbeitungszentrum sind keine großen Reibungsmomente etc. zur Veränderung der Stellung des Arbeitsmittels zu überwinden, die ansonsten bei der Einleitung eines Drehmomentes vom Bearbeitungszentrum über die Schnittstelle auf ein Bearbeitungswerkzeug auftreten würden. Außerdem ist der Motor dadurch an sich kleiner ausbildbar. Ferner ist durch das erfindungsgemäße Erweiterungsaggregat auch eine größere Flexibilität gegeben. Bisher mußte der Motor im Bearbeitungszentrum entsprechend dem bei einer Bearbeitung maximal anfallenden Drehmoment ausgelegt werden; d.h gemäß dem in die Spindeleinheit des Bearbeitungszentrums einwechselbaren Aggregat, das das größte Drehmoment zu seiner Lageänderung benötigt. Nunmehr ist es jedoch möglich, lediglich ein oder eine geringe Anzahl von Erweiterungsaggregaten, die mit verschieden großen Antriebseinheiten ausgestattet sind, für eine breite Palette von Arbeitsmitteln vorzusehen, so daß für bestimmte Gruppen von Bearbeitungsaggregaten gemäß dem Stand der Technik ein Erweiterungsaggregat ausreicht. Das ist wiederum für viele Benutzer von Bearbeitungszentren sehr vorteilhaft, da sie nur ein derartiges Erweiterungsaggregat zukaufen müssen, das für ihre Zwecke und die daran ankoppelbaren Arbeitsmittel ausgelegt ist. Außerdem wird-hierdurch auch bei der Bearbeitung eines Werkstücks Energie eingespart, da für den jeweiligen Zweck geeignetere Motoren bereitgestellt werden.

Dadurch, daß das erfindungsgemäße Erweiterungsaggregat selbst zumindest eine Aufnahmeeinrichtung aufweist, die auch zur Aufnahme eines anderen Erweiterungsaggregates gemäß der Erfindung ausgestaltet sein kann, können mehrere numerisch gesteuerte Achsen an ein bestehendes Drei-Achsen-Bearbeitungszentrum angefügt werden. Insbesondere ist dies vorteilhaft, wenn sehr kompliziertere Stellungen bei der Bearbeitung anfallen. Dazu waren bisher immer vier- oder mehrachsige Bearbeitungszentren notwendig, die weitaus teuerer sind als die vorgenannten Bearbeitungszentren.

Ferner ist durch das erfindungsgemäße Erweiterungsaggregat weiterhin die automatische Auswechselbarkeit eines Arbeitsmittels, wie es bereits bisher bekannt ist, gegeben. Demgemäß bedarf es keiner Änderungen an einer automatischen Austauscheinrichtung, die an einem Bearbeitungszentrum nach dem Stand der Technik vorgesehenen ist.

Eine vorteilhafte Weiterbildung des erfindungsgemäßen Erweiterungsaggregates weist ein Getriebe auf, mit dem ein Drehmoment von der Spindeleinheit des Bearbeitungszentrums zur Aufnahmeeinrichtung in Gestalt einer Abtriebsspindel übertragbar ist. Damit ist nicht nur eine Veränderung der Stellung der Aufnahmeeinrichtung und mit dem daran befindlichen Arbeitsmittel möglich, sondern auch die Übertragung des Drehmoments von dem Bearbeitungszentrum durch das Erweiterungsaggregat hindurch in das daran angekoppelte Arbeitsmittel.

Indem die Aufnahmeeinrichtung im Erweiterungsaggregat schwenkbar angeordnet ist, kann eine Lageränderung der bisherigen 3D-Achsensteuerung des Bearbeitungszentrums um eine Verschwenkachse erweitert werden. Damit ist in sehr einfacher Programmierweise eine quasi volle 3D-Bearbeitung eines Werkstücks im Bearbeitungszentrum möglich.

Für manche es vorteilhaft, wenn die Veränderung der Stellung des Arbeitsmittels auch translatorisch möglich ist. Hierfür ist vorteilhafterweise im Erweiterungsaggregat eine translatorisch verschiebbare Aufnahmeeinrichtung vorgesehen. Diese kann natürlich auch mit der Verschwenkung gemäß der zuvor beschriebenen, vorteilhaften Ausführungsform kombiniert werden.

Vorteilhafterweise weist jede rotatorische oder translatorische Stellungsänderung der Aufnahmeeinrichtung eine eigene Antriebseinrichtung auf. Damit sind mit eigenen Regelkreisen die jeweiligen Antriebe im Erweiterungsaggregat einzeln ansteuerbar und lediglich die zugehörigen Stellungsbefehle müssen vom Bearbeitungszentrum übermittelt werden.

Wie bei den herkömmlichen Aggregaten wird vorteilhafterweise auch für den Antrieb im Erweiterungsaggregat ein servogeregelter AC- oder DC-Motor verwendet. Es können aber auch je nach Anwendungsfall Schrittmotoren eingebaut werden

Indem ein Getriebe zwischen der Antriebseinrichtung und der Aufnahmeeinrichtung zwischengeschaltet ist, können Stellungsänderungen sehr genau herbeigeführt werden. Zudem ist dadurch auch eine Anpassung an das zur Verstellung notwendige Drehmoment möglich.

Eine sehr platzsparende Bauweise eines Erweiterungsaggregates wird dadurch erzielt, daß das Getriebe zwischen Antriebseinrichtung und Aufnahmeinrichtung ein Schneckengetriebe ist.

Indem die Elektronikeinheit über eine Schnittstelle zum Bearbeitungszentrum von einer elektronischen Reglereinheit im Bearbeitungszentrum Befehle empfängt, die dann unabhängig von der Reglereinheit im Bearbeitungszentrum von der Elektronikeinheit im Erweiterungsaggregat ausgeführt werden, kann die gesamte Programmierung von Bewegungsabläufen für flächenförmige Teile, was die häufigste Bearbeitungsart darstellt, auch mit einer 2 oder 2½D-Steuerung (4-Achs-Maschine) unter der komfortablen, windowsgeführten Standartprogrammierung ausgeführt werden. Beim Einsatz des Erweiterungsaggregates ist dann nur dieses mittels der DIN-Programmierung (3D-Steuerung) aufwendiger zu programmieren. In anderen Worten, es erfolgt eine Umschaltung beim Einsatz eines Erweiterungsaggregates in der Steuerung und Programmierung von max 2½D auf 3D.

Vorteilhafterweise ist die Elektronikeinheit über die Schnittstelle derart mit dem Bearbeitungszentrum verbunden, daß auch Signale zurück in das Bearbeitungszentrum übermittelbar sind, um eine Synchronisation mit anderen Achsen des Bearbeitungszentrums zu ermöglichen.

Bestimmte Bearbeitungswerkzeuge benötigen für die Bearbeitung nur das Drehmoment und die Drehzahl der Spindeleinheit (Hauptspindel) des Bearbeitungszentrums und können beispielsweise durch eine automatische Werkzeugwechseleinrichtung in die Spindeleinheit eingewechselt werden. Andere Handlings- oder Sensoreinrichtungen benötigen zwar kein Drehmoment, erfordern jedoch andere zusätzliche Antriebe, Steuerleitungen, Pneumatikaggregate, Meßleitungen etc. Entsprechend muß die Schnittstelle der Spindeleinheit des Bearbeitungszentrums ausgestaltet sein, um die entsprechenden Betriebsmittel wie beispielsweise Druckluft / Fluide etc. bereitstellen. Aufgrund dessen ist bei modernen Bearbeitungszentren die Spindeleinheit mit einer komplexen Schnittstelle ausgestaltet, in der die Dreh- und Versorgungseinrichtungen jeweils beispielsweise modular aufgebaut sind. Eine derartige komplexe Schnittstelle ist beispielsweise in der deutschen Patentanmeldung 195 17 808 offenbart. Entsprechend ist es vorteilhaft, daß die Schnittstelle des Erweiterungsaggregates zur Spindeleinheit des Bearbeitungszentrums mit allen notwendigen Betriebsmittelzuleitungen ausgestattet ist, die für alle denkbaren Aggregate notwendig sind; d.h. sie ist an die Schnittstelle des Bearbeitungszentrums entsprechend angepaßt. Damit wird für jedes an das Erweiterungsaggregat einwechselbare Arbeitsmittel das hierfür notwendige Betriebsmittel bereitgestellt.

Wenn die Elektronikeinheit in dem Erweiterungsaggregat eine Speichereinrichtung zum Abspeichern der die Stellung der Aufnahmeeinrichtung beschreibenden Daten beinhaltet, kann auch nach Ein- und Auswechseln des Erweiterungsaggregates, die Bearbeitung sofort weitergeführt werden, ohne daß eine Rückführung der Information zum CNC-Programmierteil des Bearbeitungszentrums notwendig ist.

Insbesondere ist es vorteilhaft, wenn die Speichereinrichtung ein EEPROM ist, da damit ohne zuzuführende Energie die die Stellung der Aufnahmeinrichtung beschreibende Daten abspeicherbar sind.

### Kurze Beschreibung der Zeichnungen

Im folgenden ist zur weiteren Erläuterung und zum besseren Verständnis der Erfindung ein Ausführungsbeispiel unter Bezugnahme zu den beigefügten Zeichnungen näher beschrieben und erläutert. Es zeigt:
- Fig. 1: eine Querschnittsansicht durch ein erfindungsgemäßes Erweiterungsaggregat,
- Fig. 2: eine Seitenansicht des erfindungsgemäßen Erweiterungsaggregates von rechts gemäß der Ansicht in Fig. 1, wobei die Abtriebsspindel in dieser Seitenansicht um 90° verdreht dargestellt ist,
- Fig. 3: eine Seitenansicht des erfindungsgemäßen Erweiterungsaggregates von links gemäß der Ansicht in Fig. 1,
- Fig. 4: eine teilweise geschnittene Darstellung eines Teils des erfindungsgemäßen Erweiterungsaggregates gemäß einer Ansicht von rechts in Fig. 1,
- Fig. 5: eine Draufsicht auf das erfindungsgemäße Erweiterungsaggregat in Fig. 1,
- Fig. 6: eine Schemadarstellung der Aufeinanderfolge von Bearbeitungszentrum, Erweiterungsaggregat und weiterem Arbeitsmittel, und
- Fig. 7: schematische Darstellung der Aufeinanderfolge von Bearbeitungszentrum und Bearbeitungsaggregat gemäß dem Stand der Technik.

### Beschreibung eines Ausführungsbeispiels der Erfindung

### Aufbau eines beispielhaften Erweiterungsaggregates:

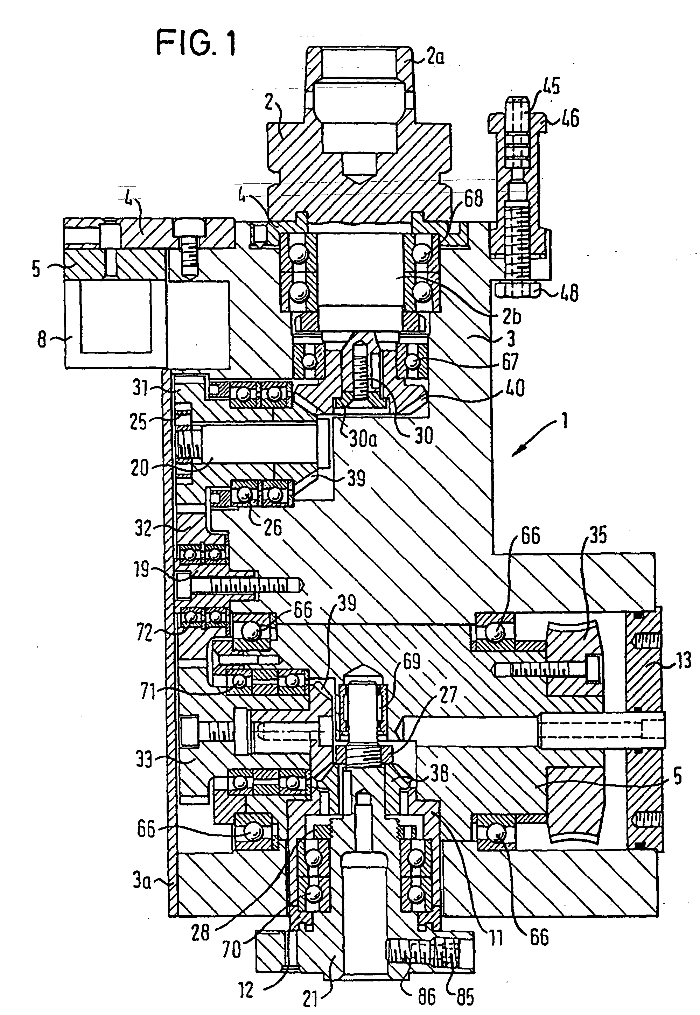

In der in Fig. 1 gezeigten Querschnittsansicht eines erfindungsgemäßen Erweiterungsaggregates 1 ist eine zur Aufnahme in die Spindel des Bearbeitungszentrums (hier nicht gezeigt) bestimmte Spindelaufnahme 2 mit einem Spindelaufnahmekegel 2a ausgestattet. Die Spindelaufnahme 2 ist mittels Spindellager 68, hier Schrägkugellager in O-Anordnung, in einem Gehäuse 3 drehbar gelagert. Dazu weist die Spindelaufnahme 2 ein Wellenstück 2b auf, an dessen Stirnseite mittels einer Schraube 30 und einer Bordscheibe 30a ein Kegelrad 40 befestigt ist. Das Kegelrad 40 ist wiederum im Gehäuse 3 mittels eines Rillenkugellagers 67 gelagert.

In der in Fig. 1 gezeigten Querschnittsansicht ist linksseitig der Achse des Kegelrades 40 der Spindelaufnahme 2 ein mit dem Kegelrad 40 kämmendes Kegelrad 39 drehbar gelagert. Das Kegelrad 39 ist mittels eines Schraubenbolzens 20 und einer auf dem Schraubenbolzen 20 aufgeschraubten Wellenmutter 25 an einem Zahnrad 31 angebracht. Mittels Rillenkugellagern (26) ist das Zahnrad 31 und das Kegelrad 39 im Gehäuse 3 gelagert.

Das Zahnrad 31 kämmt mit einem Zahnrad 32. Das Zahnrad 32 ist mittels Rillenkugellagern 72 auf einem Zwischenstück 19 drehbar gelagert. Das Zwischenstück 19 selbst ist mittels eines Schraubenbolzens am Gehäuse 3 verschraubt. Ein weiteres Zahnrad 33 kämmt mit dem Zahnrad 32. Das letztere Zahnrad 33 ist mittels einer Schraubenbolzenverbindung mit einem Kegelrad 39 verbunden. Im Gehäuse erfolgt die Lagerung des Zahnrades 33 und des Kegelrades 39 über Rillenkugellager 71. Mit dem Kegelrad 39 kämmt ein weiteres Kegelrad 38, das hierzu im 90°-Winkel angeordnet ist. Die Drehachse des letzteren Kegelrades 38 fluchtet mit der Drehachse der Spindelaufnahme 2. Mit dem Kegelrad 38 ist über eine Schraubverbindung eine Abtriebsspindel 21 verbunden. Die Abtriebsspindel 21 ist mittels in O-Anordnung angeordneten Rillenkugellagern 70 in einer Lagerbuchse 11 drehbar gelagert. Die Rillenkugellager 70 werden dabei auf der Abtriebsspindel 21 durch eine Stellmutter 28 befestigt. Durch eine Nutmutter 27 ist das Kegelrad 38 auf der Abtriebsspindel 21 gehalten. Ein Deckelteil 12 schließt die Rillenkugellager 70 nach außen hin ab. Außerdem ist die Abtriebsspindel 21 in einem Schwenkgehäuseteil 5 mittels Nadellager 69 drehbar gelagert. Die Abtriebsspindel 21 weist entsprechende Bohrungen 85, 86 auf, damit ein Bearbeitungswerkzeug oder -aggregat daran anbringbar ist. Die Abtriebsspindel 21 ist natürlich auch so auszugestalten, daß ein anderes Erweiterungsaggregat mit einer Spindelaufnahme 2 daran einwechselbar angesetzt werden kann.

Die gesamte Abtriebsspindel 21 und das mit dem Kegelrad 38 der Abtriebsspindel kämmende Kegelrad 39 wie auch das damit verbundene Zahnrad 33 sind im Gehäuse 3 über das Schwenkgehäuseteil 5 im Gehäuse 3 verschwenkbar gelagert. Die drehbare Lagerung des Schwenkgehäuseteils 5 gegenüber dem Gehäuse 3 erfolgt über beabstandet voneinander in O-Anordnung vorgesehene Rillenkugellager 66. Gegenüber dem Kegelrad 39 ist an der Stirnseite des Schwenkgehäuseteils 5 ein Schneckenrad 35 mittels Zylinderschrauben befestigt. Nach außen ist dieses Schneckenrad 35 durch einen Deckel 13 hermetisch abgeschlossen. Dazu ist im Deckel 13 ein umlaufender O-ing eingelegt. Durch den Deckel 13 und das Schwenkgehäuseteil 5 erstreckt sich eine Durchgangsbohrung bis zu den Kegelrädern 38, 39. Durch diese Durchgangsbohrung ist ein Schmiermittel einbringbar.

Wie linksseitig in der Fig. 1 dargestellt ist, ist die gesamte Stirnrädergetriebeanordnung durch einen Deckel 3a nach außen abgeschlossen. Oberhalb dieses Deckels 3a ist ein Schwenkgehäuse 8 an dem Gehäuse 3 über Schrauben und ein Deckelteil 4 angeflanscht. Gegenüber diesem Schwenkgehäuse ist im Querschnitt ein Arretierbolzen 46 gezeigt, in dem ein Indexstift 45 mit einer Stellschraube 48 gelagert ist.

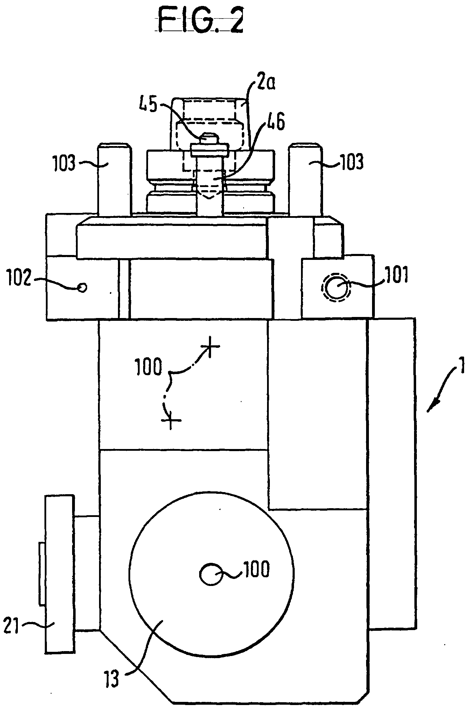

Aus der in der Fig. 2 gezeigten Seitenansicht ist wiederum die Spindelaufnahme 2, 2a gut erkennbar. Bei dieser Ansicht sind rechts und links der Spindelaufnahme 2 Paßbolzen 103 ersichtlich, die in eine zugehörige Aufnahme an der Schnittstelle der Spindeleinheit des Bearbeitungszentrums passen. Bei dieser Ansicht ist mittig wiederum der bereits in Fig. 1 erläuterte Arretierbolzen 46 mit dem Indexstift 45 erkenntlich. Linksseitig ist ein Luftabschluß 102 dargestellt. Gegenüberliegend ein Kabelaustritt 101. Schmierstellen 100 sind schematisch angedeutet. Diese sind mit den einzelnen Getriebestufen verbunden. Gut erkennbar ist die um 90° verschwenkte Abtriebsspindel 21. Ferner ist mittig im Gehäuse 3 der Deckel 13 zur Abdeckung des Schneckenrades 35 angeordnet.

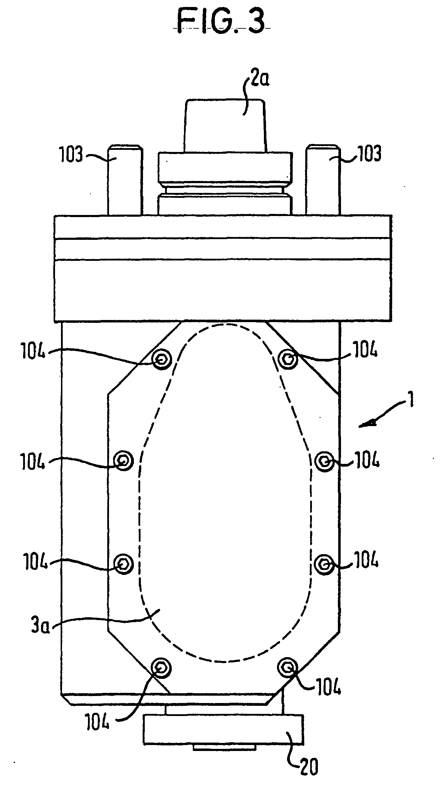

Die in der Fig. 3 gezeigte Seitenansicht zeigt insbesondere den Deckel 3a, der zur Abdeckung des Stirnradgetriebes dient. In dieser Ansicht sind auch die zur Befestigung des Deckels 2a erforderlichen Schrauben 104 angedeutet.

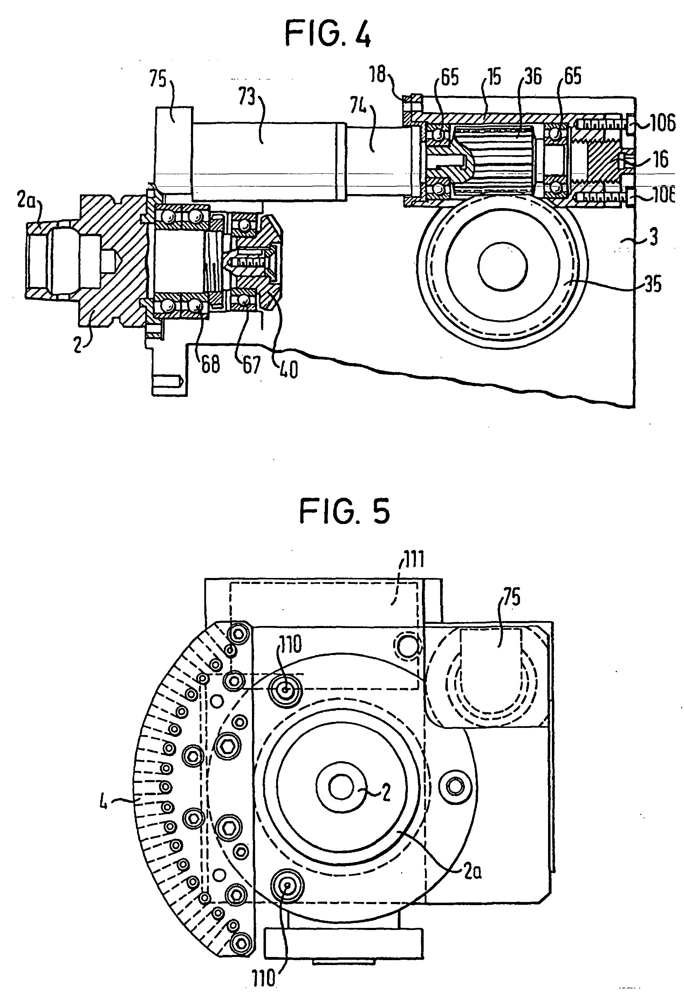

Aus der in der Fig. 4 gezeigten, teilweise gebrochen dargestellten Seitenansicht ist gegenüber der in den Fig. 1 und 2 gezeigten Ansichten zusätzlich die zur Verschwenkung der Abtriebsspindel 21 erforderliche Antriebseinheit gut erkennbar. Diese Antriebseinheit besteht aus einem Gleichstommotor 73, der mit einem Drehimpulsgeber 75 ausgestattet ist. An dem Gleichstrommotor 73 schließt sich ein Planetengetriebe 74 an, das mit einer Schneckenwelle 36 gekoppelt ist. Die Schneckenwelle 36 ist mittels rechts- und links der Spindelwelle 36 angeordneten Schrägkugellagern 65 in einer Patrone 15 drehbar gelagert. Die Patrone 15 wiederum ist im Gehäuse 3 eingesetzt. Mittels eines Deckels 18 ist das Schrägkugellager 65, das näher zum Planetengetriebe 74 liegt, abgetrennt. In der Patrone 15 ist an einer Stirnseite mittig über ein Gewinde eine Stellschraube 16 eingedreht. Ferner sind Schrauben 106 zur Befestigung der Patrone 15 im Gehäuse 3 umfangsmäßig um die Stellschraube 16 herum angeordnet. In der Ansicht gemäß der Fig. 4 ist gut erkennbar wie die Schneckenwelle 36 in das Schneckenrad 35 eingreift.

Die Draufsicht gemäß der Fig. 5 zeigt deutlich die Ausgestaltung des Gehäusedeckelteils 4 und dessen Befestigung mittels einer Anzahl Schrauben. Ferner ist wiederum die Aufnahmespindel 2 mit dem Spindelkegel 2a erkennbar. Luftanschlüsse 110 sind in dieser Ansicht ober- und unterhalb der Aufnahmespindel 2 angeordnet. Außerdem ist hierin gestrichelt ein Raum 111 für eine Regelkarte der Elektronikeinheit des Erweiterungsaggregates 1 angedeutet. Rechts davon ist wiederum der Drehimpulsgeber 75 des Schwenkantriebes 73 erkennbar.

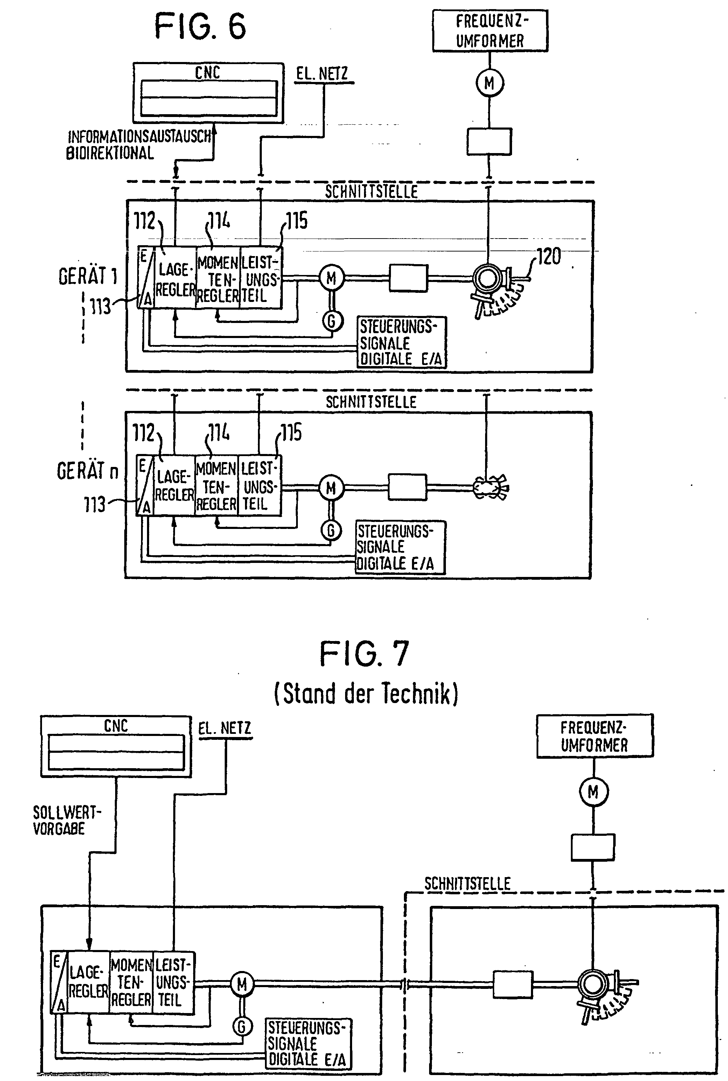

In der Fig. 6 ist schematisch die Ankoppelung eines Erweiterungsaggregates der Erfindung an ein Bearbeitungszentrum dargestellt. Hieraus ist erkennbar, daß über eine Schnittstelle vom CNC-Bearbeitungsprogramm des Bearbeitungszentrums ein bidirektionaler Informationsaustausch mit der Elektronikeinheit des Erweiterungsaggregates erfolgt. Zudem wird vom Bearbeitungszentrum elektrische Energie dem Antrieb im Erweiterungsaggregat zugeführt. Ferner wird über die Spindeleinheit des Bearbeitungszentrums ein Drehmoment auf die Abtriebsspindel des Erweiterungsaggregates übertragen. Wie aus dieser schematischen Darstellung erkennbar ist, umfaßt die Elektronikeinheit des Erweiterungsaggregates einen Lageregler 112, einen Momentenregler 114 sowie ein Leistungsteil 115. Mit Hilfe der Elektronikeinheit wird dem Antrieb im Erweiterungsaggregat das erforderliche Moment zur Verschwenkung eines hier am Erweiterungsaggregat angekoppelten Fräsers 120 übermittelt. Dabei erfolgt von der CNC-Steuerung des Bearbeitungszentrums ein Austausch oder Soll- und Istwertdaten über die Informationsschnittstelle, so daß eine koordinierte Bewegung aller Achsen ausgeführt werden kann. Die Regelung dieser Sollwerte von der Ausgangsstellung in die gewünschte Endstellung erfolgt mittels der Elektronikeinheit 113 - 115. Dabei wird über den im Erweiterungsaggregat befindlichen Regelkreis selbständig und unabhängig vom CNC-Steuerungsprogramm des Bearbeitungszentrums die Regelung für den Stellmotor 73 bis zur Erreichung seiner Sollpositionen geregelt.

Ferner ist beispielhaft dargestellt, daß ein weiteres Erweiterungsaggregat an ein erstes Erweiterungsaggregat über eine dann entsprechend anders als in den vorigen Figuren ausgebildete Abtriebsspindel 21 einwechselbar sein kann.

Demgegenüber ist in der Fig. 7 der bisherige Stand der Technik dargestellt. Hierbei wird zur Änderung der Verschwenkung ein Fräsaggregat an die Spindeleinheit des Bearbeitungszentrums eingewechselt. Über die Spindeleinheit und deren Schnittstelle erfolgt die Einbringung des Drehmoments auf den Fräser. Ferner ist die gesamte Lagerregelung für eine Verdrehung an der Hauptspindel im Bearbeitungszentrum beinhaltet, und eine Regelung erfolgt über die Schnittstelle an der Spindeleinheit zum daran direkt eingewechselten Fräsaggregat.

### Arbeitsweise des zuvor beschriebenen Erweiterungsaggrates

Das zuvor erläuterte erfindungsgemäße Erweiterungsaggregat 1 wird in die Spindeleinheit (Hauptspindel) eines Bearbeitungszentrums eingewechselt. Zur Arretierung des Erweiterungsaggregates 1 ist hierfür der Indexstift 45 und der Arretierbolzen 46 vorgesehen, die in eine entsprechende Arretierhalterung an der Schnittstelle der Spindeleinheit des Bearbeitungszentrums passen. Außerdem greifen die Paßbolzen 103 in entsprechende Bohrungen an der Schnittstelle der Spindeleinheit ein. Das Drehmoment der Spindeleinheit wird über die Spindelaufnahme 2 des Erweiterungsaggregates eingeleitet. Über die einzelnen Kegel- und Zahnräder 30, 39, 31, 32, 33, 39, 38 wird dieses Drehmoment auf die Abtriebsspindel 21 übertragen. Die Übersetzung dieses Getriebes ist natürlich an die jeweiligen an die Abtriebsspindel 21 einwechselbaren Arbeitsmittel angepaßt.

Das Arbeitsmittel wird an die Abtriebsspindel 21 eingewechselt und dort mittelshier nicht näher gekennzeichneten Mitteln festgelegt.

Wird nun bei der Bearbeitung eines Werkstücks die Änderung der Stellung des an der Abtriebsspindel 21 angekoppelten Arbeitsmittels notwendig, so werden vom CNC-Bearbeitungsprogramm des Bearbeitungszentrums über die Schnittstelle hinweg der Elektronikeinheit die entsprechenden Befehle bzw. die entsprechenden Signale übermittelt. Die Elektronikeinheit, hier der Lageregler 112, der Momentenregler 114 und das Leistungsteil 115 regeln den Motor 73 dergestalt, daß dieser sich in Bewegung setzt. Dadurch wird die Schneckenwelle und entsprechend das Schneckenrad 35 gedreht. Aufgrund der Drehung des Schneckenrades 35 erfolgt eine Verdrehung der Abtriebsspindel 21. Mit Hilfe des im Regelkreis integrierten Meßsystems kann unabhängig vom CNC-Bearbeitungsprogramm die Regelung bis zur gewünschten Endstellung der Arbeitsspindel 21 erfolgen.

Insbesondere ist es natürlich dann auch vorteilhaft, wenn zusammen mit diesen bisherigen Achsen des Bearbeitungszentrums eine Synchronisation der Verschwenkbewegung der Arbeitsspindel 21 erfolgt, so daß diese vollständig in das Bearbeitungsprogramm integriert wird. Dazu ist dann eine bidirektionale Austauschleitung zum CNC-Bearbeitungsprogramm des Bearbeitungszentrums notwendig.

## Patentansprüche

1. Erweiterungsaggregat für ein Bearbeitungszentrum, das in die Spindeleinheit des Bearbeitungszentrums einwechselbar ist, mit
- zumindest einer Aufnahmeeinrichtung (21) zur Aufnahme eines Arbeitsmittels, wie ein Bearbeitungswerkzeug oder -aggregat für Holz- oder holzähnliche Werkstoffe, Kunststoffe oder dergleichen oder eine Handlings- oder Sensoreinrichtung,
- zumindest einer Antriebseinrichtung (73) zum Verändern der Stellung der Aufnahmeeinrichtung (21) im Erweiterungsaggregat, **dadurch gekennzeichnet, daß** das Erweiterungsaggregat
- zumindest eine Elektronikeinheit (74, 111) aufweist, zum Regeln der zumindest einen Antriebseinrichtung (73) und damit zur Regelung der Veränderung der Arbeitsstellung des am Erweiterungsaggregat einwechselbar anbringbaren Arbeitsmittels, wozu die Elektronikeinheit von einer elektronischen Reglereinheit im Bearbeitungszentrum über eine Schnittstelle Befehle empfängt, die dann unabhängig von der Reglereinheit im Bearbeitungszentrum von der Elektronikeinheit ausgeführt werden.

2. Erweiterungsaggregat nach Anspruch 1, **dadurch gekennzeichnet, daß** ein Getriebe (40, 39, 31, 32, 71, 39, 38) beinhaltet ist, mit dem ein Drehmoment von der Spindeleinheit des Bearbeitungszentrums zur Aufnahmeeinrichtung in Gestalt einer Abtriebsspindel (21) übertragbar ist.

3. Erweiterungsaggregat nach Anspruch 1 oder 2, **dadurch gekennzeichnet, daß** die Aufnahmeeinrichtung (21) im Erweiterungsaggregat (1) schwenkbar angeordnet ist.

4. Erweiterungsaggregat nach einem der Ansprüche 1 oder 2, **dadurch gekennzeichnet, daß** die Aufnahmeeinrichtung (21) im Erweiterungsaggregat (1) translatorisch verschiebbar angeordnet ist.

5. Erweiterungsaggregat nach Anspruch 3 oder 4, **dadurch gekennzeichnet, daß** für jede rotatorische oder translatorische Stellungsänderung der Aufnahmeeinrichtung (21) eine eigene Antriebseinrichtung (73) im Erweiterungsaggregat (1) vorhanden ist.

6. Erweiterungsaggregat nach Anspruch 1, **dadurch gekennzeichnet, daß** die Antriebseinrichtung ein AC- oder DC-Motor (73) ist.

7. Erweiterungsaggregat nach Anspruch 1, **dadurch gekennzeichnet, daß** die Antriebseinrichtung (73) über ein Getriebe (74, 36, 35) mit der Aufnahmeeinrichtung (21) gekoppelt ist.

8. Erweiterungsaggregat nach Anspruch 7, **dadurch gekennzeichnet, daß** das Getriebe ein Schneckengetriebe (35, 36) umfasst.

9. Erweiterungsaggregat nach Anspruch 1, **dadurch gekennzeichnet, daß** die Elektronikeinheit zudem so ausgebildet ist, daß über die Schnittstelle zum Bearbeitungszentrum zur elektronischen Reglereinheit im Bearbeitungszentrum Signale gesendet werden, die zur Synchronisation mit anderen Achsen des Bearbeitungszentrums verwendbar sind.

10. Erweiterungsaggregat nach Anspruch 1, **dadurch gekennzeichnet, daß** die Aufnahmeeinrichtung (21) mit einer Schnittstelle ausgebildet ist, die die für den Betrieb der in der Aufnahmeinrichtung (21) befindlichen Arbeitsmittel notwendigen Betriebsmittel bereitstellt, und daß eine entsprechende Schnittstelle auch im zum Einwechseln in die Spindeleinheit vorgesehenen Anschlußbereichs (2, 2a) des Erweiterungsaggregates (1) vorhanden ist.

11. Erweiterungsaggregat nach Anspruch 1, **dadurch gekennzeichnet, daß** die Elektronikeinheit eine Speichereinrichtung zum Abspeichern der die Stellung der Aufnahmeeinrichtung (21) beschreibenden Daten .

12. Erweiterungsaggregat nach Anspruch 11, **dadurch gekennzeichnet, daß** die Speichereinrichtung ein EEPROM ist.

## Claims

1. Expansion unit for a machining centre which can be exchanged into the spindle unit of the machining centre, having
- at least one receiving device (21) for receiving a work means such as a machining tool or set for wood or wood-like materials, plastics or the like or a handling or sensor device,
- at least one drive device (73) for changing the position of the receiving device (21) in the expansion unit,
**characterised in that** the expansion unit
- has at least one electronics unit (74, 111) for controlling the at least single drive device (73) and hence for controlling the change in the working position of the work means exchangeably attachable to the expansion unit, for which purpose the electronics unit receives commands from an electronic controller unit in the machining centre via an interface which are then executed independently of the controller unit in the machining centre by the electronics unit.

2. Expansion unit according to Claim 1, **characterised in that** a gear (40, 39, 31, 32, 71, 39, 38) is included with which a torque can be transmitted from the spindle unit of the machining centre to the receiving device in the form of a power take-off spindle (21).

3. Expansion unit according to Claim 1 or 2, **characterised in that** the receiving device (21) is arranged pivotably in the expansion unit (1).

4. Expansion unit according to one of Claims 1 or 2, **characterised in that** the receiving device (21) is arranged in translationally displaceable manner in the expansion unit (1).

5. Expansion unit according to Claim 3 or 4, **characterised in that** for each rotational or translational change in position of the receiving device (21) there is a dedicated drive device (73) in the expansion unit (1).

6. Expansion unit according to Claim 1, **characterised in that** the drive device is an AC or DC motor (73).

7. Expansion unit according to Claim 1, **characterised in that** the drive device (73) is linked via a gear (74, 36, 35) to the receiving device (21).

8. Expansion unit according to Claim 7, **characterised in that** the gear comprises a worm gear (35, 36).

9. Expansion unit according to Claim 1, **characterised in that** the electronics unit is additionally constructed in such a way that via the interface to the machining centre signals are sent to the electronic controller unit in the machining centre which can be used for synchronization with other axes of the machining centre.

10. Expansion unit according to Claim 1, **characterised in that** the receiving device (21) is constructed with an interface which provides the operating resources required for the operation of the work means located in the receiving device (21) and that a corresponding interface is also present in the connecting region (2, 2a) of the expansion unit (1) for exchanging into the spindle unit.

11. Expansion unit according to Claim 1, **characterised in that** the electronics unit is a memory device for storing the data describing the position of the receiving device (21).

12. Expansion unit according to Claim 11, **characterised in that** the memory device is an EEPROM.

## Revendications

1. Agrégat extension pour un centre d'usinage, qui est incorporable dans l'unité d'arbre du centre d'usinage avec:
- au moins un dispositif de réception (21) pour la réception d'un moyen de travail, tel qu'un outil ou un agrégat d'usinage pour des matériaux en bois ou similaires au bois, des matières plastiques ou similaires ou un dispositif de manutention ou de détection;
- au moins un dispositif d'entraînement (73) pour changer la position du dispositif de réception (21) dans l'agrégat d'extension,
**caractérisé en ce que** l'agrégat d'extension comprend au moins une unité électronique (74, 111) pour régler l'au moins un dispositif d'entraînement (73) et ainsi pour le réglage de la modification de la position de travail du moyen de travail qui peut être disposé de façon incorporable sur l'agrégat d'extension, l'unité électronique recevant à cet effet à travers d'une interface des commandes d'une unité de régulation électronique située dans le centre d'usinage, lesquelles sont alors exécutées indépendamment de l'unité de régulation dans le centre d'usinage par l'unité électronique .

2. Agrégat d'extension selon la revendication 1, **caractérisé en ce qu'**un engrenage (40, 39, 31, 32, 71, 39, 38) est incorporé, par lequel un couple peut être transmis de l'unité d'arbre du centre d'usinage au dispositif de réception sous la forme d'un arbre de sortie (21).

3. Agrégat d'extension selon la revendication 1 ou 2, **caractérisé en ce que** le dispositif de réception (21) est disposé de façon pivotante dans l'agrégat d'extension (1).

4. Agrégat d'extension selon l'une des revendications 1 ou 2, **caractérisé en ce que** le dispositif de réception (21) est disposé de façon déplaçable en translation dans l'agrégat d'extension .

5. Agrégat d'extension selon la revendication 3 ou 4, **caractérisé en ce que** pour chaque changement de position rotatoire ou translatoire du dispositif de réception (21) un dispositif d'entraînement (73) propre est présent dans l'agrégat d'extension (1).

6. Agrégat d'extension selon la revendication 1, **caractérisé en ce que** le dispositif d'entraînement est un moteur AC ou DC.

7. Agrégat d'extension selon la revendication 1, **caractérisé en ce que** le dispositif d'entraînement (73) est couplé par un engrenage (74, 36, 35) au dispositif de réception (21).

8. Agrégat d'extension selon la revendication 7, **caractérisé en ce que** l'engrenage comprend un engrenage à vis sans fin (35, 36).

9. Agrégat d'extension selon la revendication 1, **caractérisé en ce que** l'unité électronique est, en outre, formée de façon telle que des signaux sont envoyés par l'interface vers le centre d'usinage à l'unité de régulation électronique dans le centre d'usinage, lesquels sont utilisables pour la synchronisation avec d'autres axes du centre d'usinage.

10. Agrégat d'extension selon la revendication 1, **caractérisé en ce que** le dispositif de réception (21) est formé avec une interface, qui met à disposition les moyens de fonctionnement nécessaire pour le fonctionnement des moyens de travail situés dans le dispositif de réception, et qu'une interface correspondante est présente également dans la zone de connexion (2, 2a) de l'agrégat d'extension (1) prévue dans l'unité d'arbre échangeable.

11. Agrégat d'extension selon la revendication 1, **caractérisé en ce que** l'unité électronique comprend un dispositif de stockage pour stocker les données décrivant la position du dispositif de réception (21).

12. Agrégat d'extension selon la revendication 11, **caractérisé en ce que** le dispositif de stockage est un EEPROM.
